# EUROPEAN PATENT APPLICATION

(11) **EP 4 311 081 A1**
(43) Date of publication of application: **24.01.2024**
(21) Application number: 23186213.7
(22) Date of filing: 18.07.2023
(51) Int. Cl.: H02K 7/06, H02K 33/00, H02K 49/10, H02K 53/00, H02N 11/00

(54) **MAGNETICALLY DRIVING APPARATUS**

(30) Priority: 18.07.2022 CN 202210843805
(71) Applicant: Chang, Li, Taichung City 407332 (TW)
(72) Inventor: Chang, Li, Taichung City 407332 (TW)
(74) Representative: Lang, Christian

(57) **Abstract**

A magnetically driving apparatus includes two magnetic units and a driving unit. Each of the magnetic units includes a magnet. The N-poles or S-poles of the magnetic units are directed to each other. The driving unit is located between the magnetic units. Each of the driving units includes a magnetically permeable element movable between an active position for magnetically attracting the magnets and an idle position clear of the magnetism of the magnets to allow the magnets to magnetically repulse each other.

## Description

### BACKGROUND OF INVENTION

### 1. FIELD OF INVENTION

The present invention relates to a magnetically driving apparatus and, more particularly, to a pole-switching unit for a magnetically driving apparatus.

### 2. RELATED PRIOR ART

A magnetically driving apparatus includes two active magnetic units and a passive magnetic unit. Each of active magnetic units includes an active magnet. The passive magnetic unit includes two passive magnets. One of the active magnets exerts magnetic push on one of the passive magnets while the remaining one of the active magnets exerts magnetic attraction on the remaining one of the passive magnets. To this end, the N pole of one of the active magnets is moved toward the N pole of one of the passive magnets while the S pole of the remaining one of the active magnets is moved toward the N pole of the remaining one of the passive magnets. Accordingly, the passive magnets are reciprocated. The reciprocation of the passive magnets can be converted into rotation of a generator for example. However, a change in a magnetic field induces a current that in turn acts against the change in the magnetic field. Hence, it requires an efficient device to move the active magnets.

The present invention is therefore intended to obviate or at least alleviate the problems encountered in the prior art.

### SUMMARY OF INVENTION

It is the primary objective of the present invention to provide an efficient magnetic apparatus.

To achieve the foregoing objective, the magnetically driving apparatus includes two magnetic units and a driving unit. Each of the magnetic units includes a magnet. The N-poles or S-poles of the magnetic units are directed to each other. The driving unit is located between the magnetic units. Each of the driving units includes a magnetically permeable element movable between an active position for magnetically attracting the magnets and an idle position clear of the magnetism of the magnets to allow the magnets to magnetically repulse each other.

Other objectives, advantages and features of the present invention will be apparent from the following description referring to the attached drawings.

### BRIEF DESCRIPTION OF DRAWINGS

The present invention will be described via detailed illustration of five embodiments referring to the drawings wherein:
FIG. 1 is a simplified view of a magnetically driving apparatus according to the present invention;
FIG. 2 is a front view of a magnetically driving apparatus according to the first embodiment of the present invention;
FIG. 3 is a front view of the magnetically driving apparatus in another position than shown in FIG. 2;
FIG. 4 is a perspective view of the magnetically driving apparatus shown in FIG. 3;
FIG. 5 is a perspective view of a magnetically driving apparatus according to the second embodiment of the present invention;
FIG. 6 is a front view of a magnetically driving apparatus according to the third embodiment of the present invention;
FIG. 7 is a front view of the magnetically driving apparatus in another position than shown in FIG. 3;
FIG. 8 is a front view of the magnetically driving apparatus according to the fourth embodiment of the present invention;
FIG. 9 is a front view of the magnetically driving apparatus in another position than shown in FIG. 8; and
FIG. 10 is a front view of a magnetically driving apparatus according to the fifth embodiment of the present invention.

### DETAILED DESCRIPTION OF EMBODIMENTS

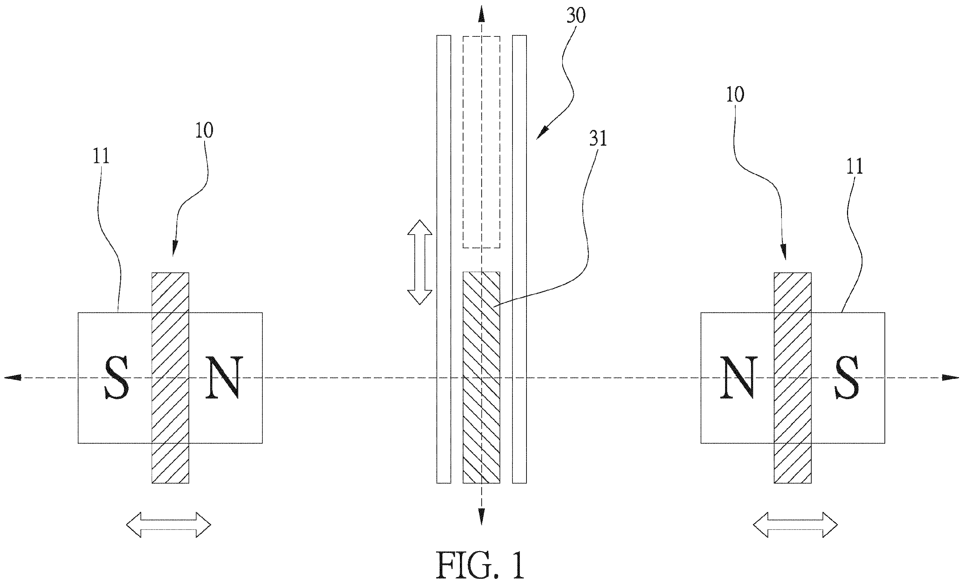

Referring to FIG. 1, a magnetically driving apparatus includes a driving unit 30 located between two magnetic units 10 according to the present invention. Each of the magnetic units 10 includes a magnet 11. The N-poles (or S-poles) of the magnets 11 are directed toward each other. The magnets 11 are movable in a first path.

The driving unit 30 includes a magnetically permeable element 31 is made of a magnetically permeable material such as iron, silicon-iron alloys and iron-nickel alloys. The magnetically permeable element 31 is movable relative to the magnets 11 in second path in perpendicular to the first path. In an active position, the magnetically permeable element 31 is subject to the magnetism of the magnetic units 10. Thus, at least one of the magnetic units 10 is magnetically attracted to the driving unit 30. In an idle position, the magnetically permeable element 31 is clear from the magnetism of the magnetic units 10. The magnetic units 10 are magnetically repulsed from each other. Hence, the movement of the magnetic units 10 are derived from the movement of the driving unit 30.

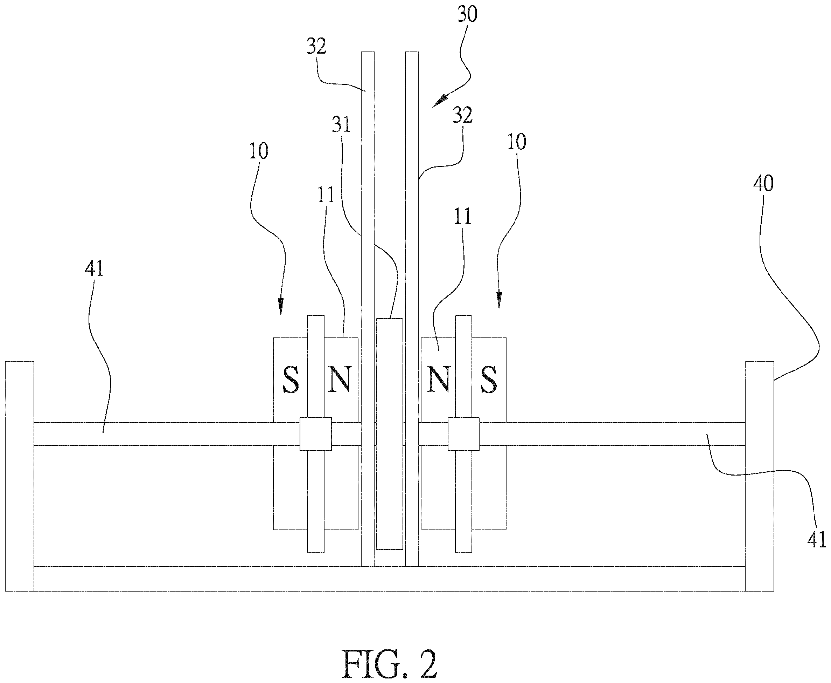

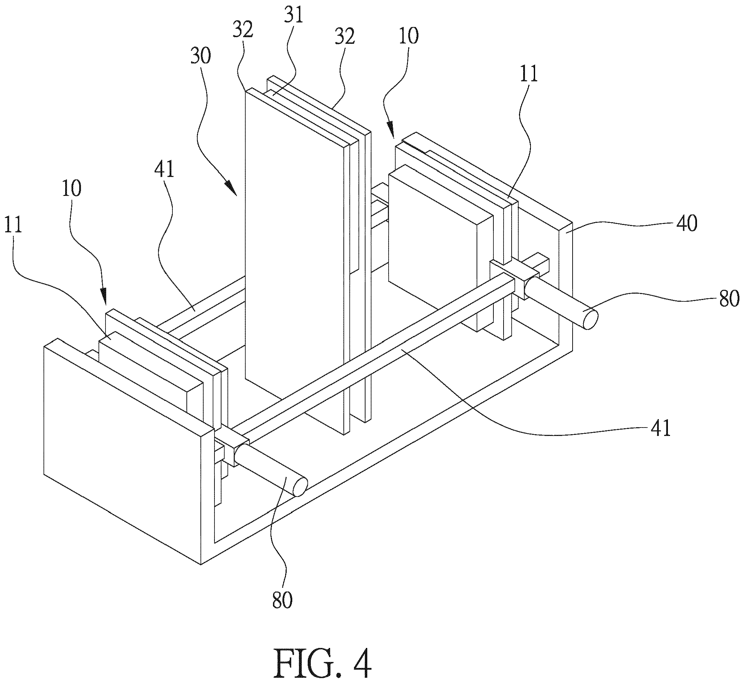

Referring to FIGS. 2 through 4, the magnetic units 10 and the driving unit 30 are supported on a frame 40 according to a first embodiment of the present invention. The frame 40 includes two tracks 41 supported on two walls of a U-shaped base (not numbered). The tracks 41 extend in parallel to each other. Each of the magnetic units 10 is movable along the tracks 41.

The driving unit 30 is located between the magnetic units 10 in a first direction and between the tracks 41 in a second direction transverse to the first direction. The driving unit 30 includes a separating unit 32 formed with two partitions in parallel to each other. Substantially, the partitions are not magnetically permeable. The magnetically permeable element 31 is movable along a narrow gap between the partitions. The partitions keep the magnets 11 from the magnetically permeable element 31, thereby minimizing friction against the movement of the magnetically permeable element 31.

Referring to FIG. 2, the magnetically permeable element 31 is in the active position. Both sides of the magnetically permeable element 31 are induced to be S-poles by the N-poles of the magnets 11. The magnetically permeable element 31 magnetically attract the magnets 11, thereby drawing the magnetic units 10 toward each other along the tracks 41.

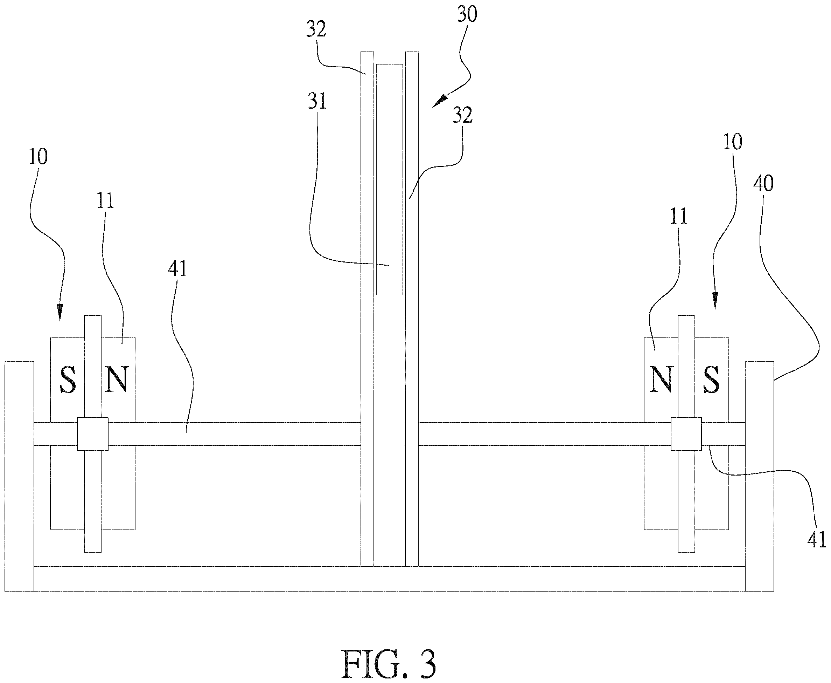

Referring to FIG. 3, the driving unit 30 is in the idle position. The N-poles of the magnets 11 are magnetically repulsed from each other, pushing the magnetic units 10 away from each other.

The magnetically driving apparatus includes two rectilinear output units 80. Each of the rectilinear output units 80 includes a ferrule (not numbered) for holding one of the magnets 11 and a rod (not numbered) formed with an end connected to the ferrule and another end for connection to an internal element.

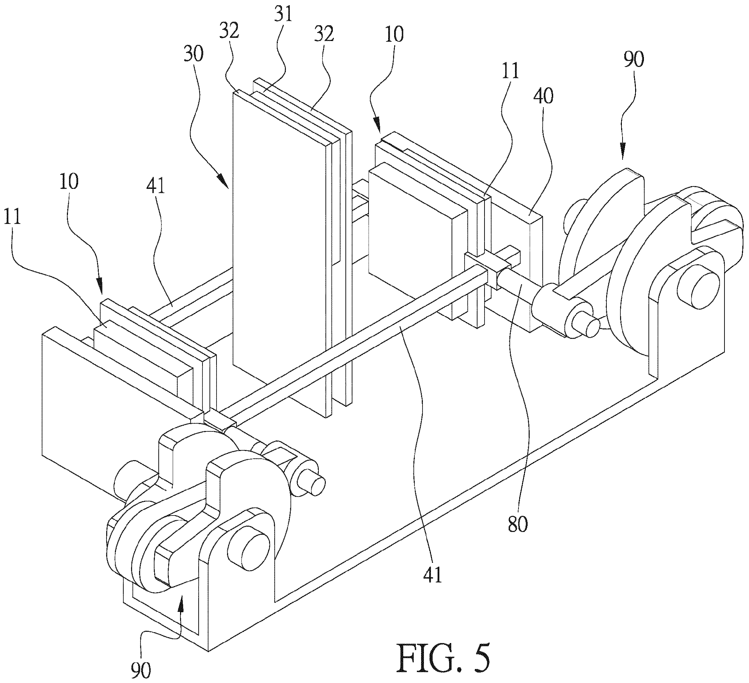

Referring to FIG. 5, there is a magnetically driving apparatus according to a second embodiment of the present invention. The second embodiment is like the first embodiment except for additionally including two crank-based output units 90. Each of the crank-based units 90 is connected to one of the rods.

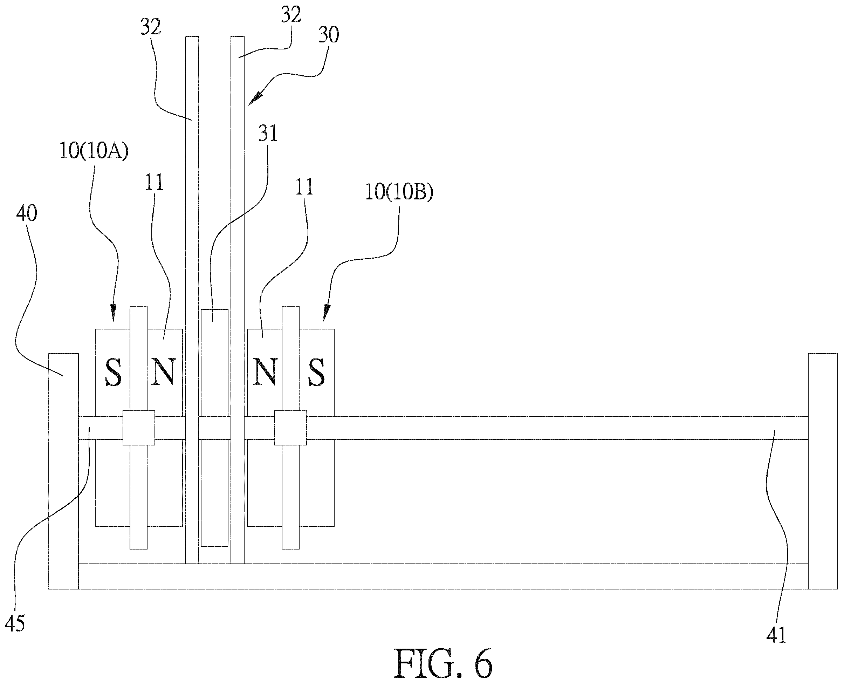

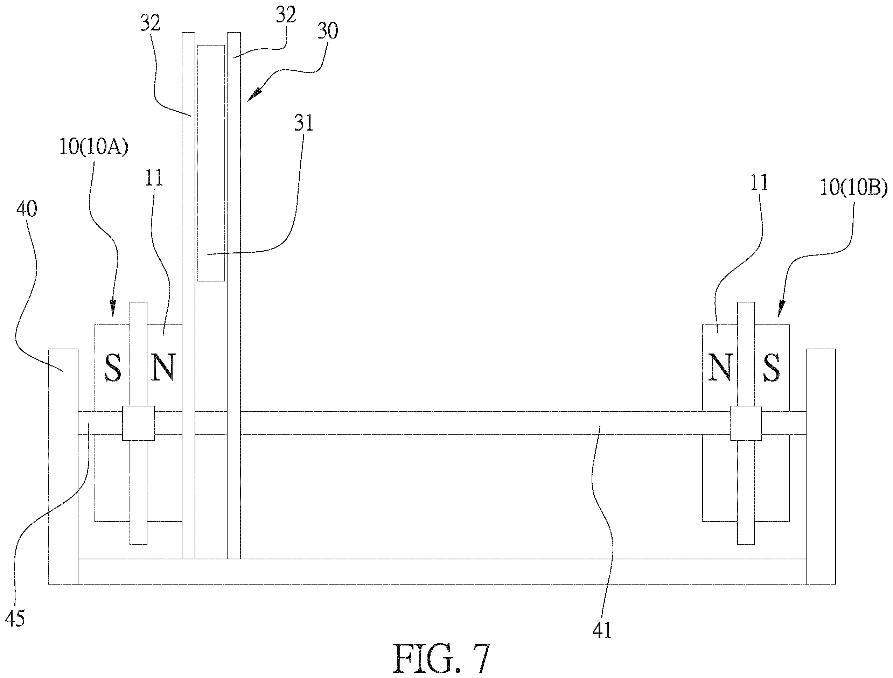

Referring to FIGS. 6 and 7, there is a magnetically driving apparatus according to a third embodiment of the present invention. The third embodiment is identical to the first embodiment except for one thing. Firstly, one of the magnetic units 10 is kept in position by holders 45 while the remaining one of the magnetic units 10 is movable along the tracks 41. The magnetic unit 10, depending on which is kept in position, is referred to as the stationary magnetic unit 10A. The stationary magnetic unit 10A is located next to the first wall of the U-shaped base of the frame 41. The other magnetic unit 10 is referred to as the movable magnetic unit 10B. The driving unit 30 is located next to the stationary magnetic unit 10A. The movable magnetic unit 10B is movable along the tracks 41 between the driving unit 30 and the second wall of the U-shaped base of the frame 40.

Referring to FIG. 6, the magnetically permeable element 31 is in the active position. The sides of the magnetically permeable element 31 are induced to be S-poles by the N-poles of the magnets 11. Thus, the driving unit 30 magnetically attracts the movable magnetic unit 10B, thereby drawing the movable magnetic unit 10b toward the driving unit 30.

Referring to FIG. 7, the driving unit 30 is in the idle position. The N-pole of the magnet 11 of the magnetic units 10A magnetically repulse the N-pole of the magnet 11 of the magnetic units 10B, thereby pushing the movable magnetic unit 10B away from the stationary magnetic unit 10A.

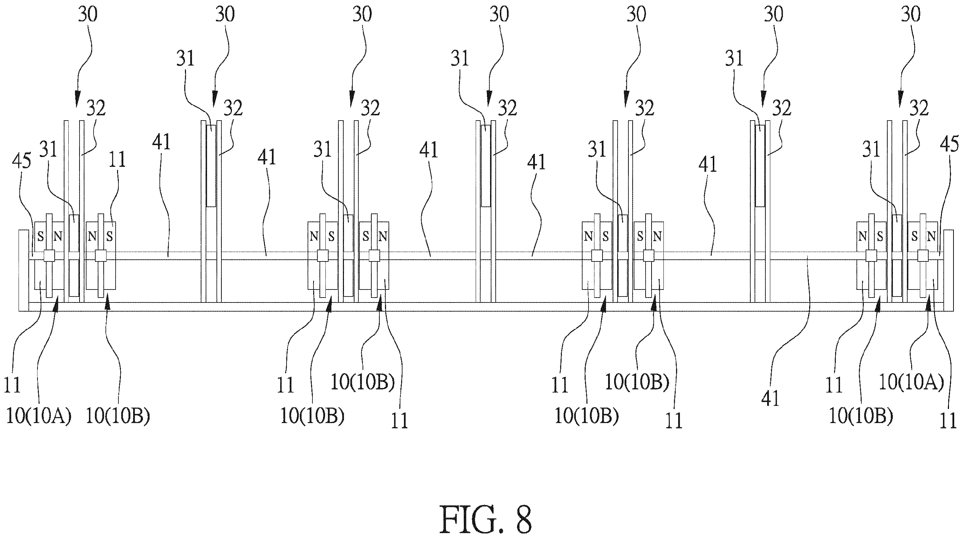

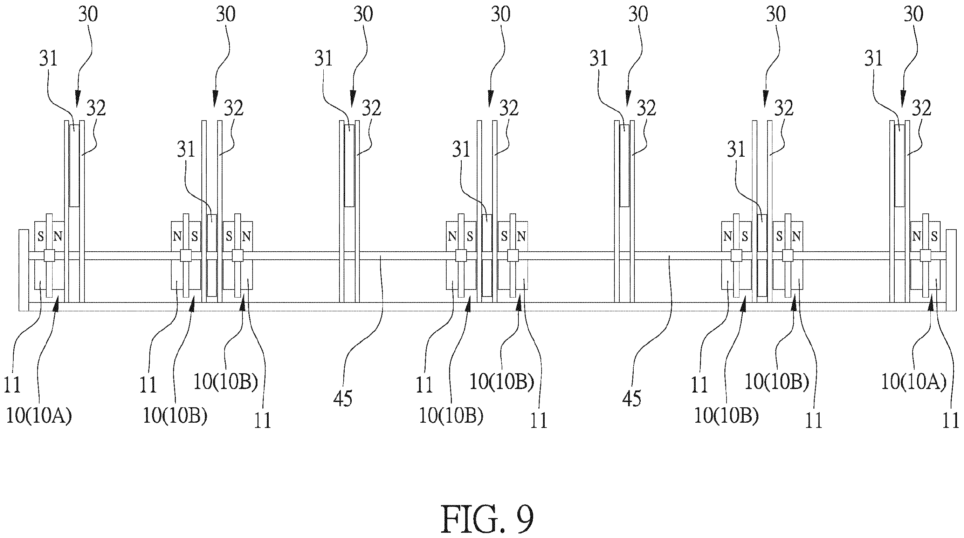

Referring to FIGS. 8 and 9, there is a magnetically driving apparatus according to a fourth embodiment of the present invention. The fourth embodiment is identical to the third embodiment except for including two stationary magnetic units 10A, six movable magnetic units 10B and seven driving units 30. The stationary magnetic unit 10A is located next to the first wall of the U-shaped base of the frame 40. The second stationary magnetic unit 10A is located next to the second wall of the U-shaped base of the frame 40. The first driving unit 30 is located next to the first magnetic unit 10A. The seventh driving unit 30 is located next to the second stationary magnetic unit 10A. The other driving units 30 are evenly located between the first and seventh driving units 30. Each of the magnetic units 10 is movable on the tracks 41 between two adjacent ones of the driving units 30.

Referring to FIG. 8, the magnetically permeable elements 31 of the first, third, fifth and seventh driving units are in the active position while the magnetically permeable elements 31 of the second, fourth and sixth driving units are in the idle position.

Referring to FIG. 9, the magnetically permeable elements 31 of the first, third, fifth and seventh driving units are in the idle position while the magnetically permeable elements 31 of the second, fourth and sixth driving units are in the active position.

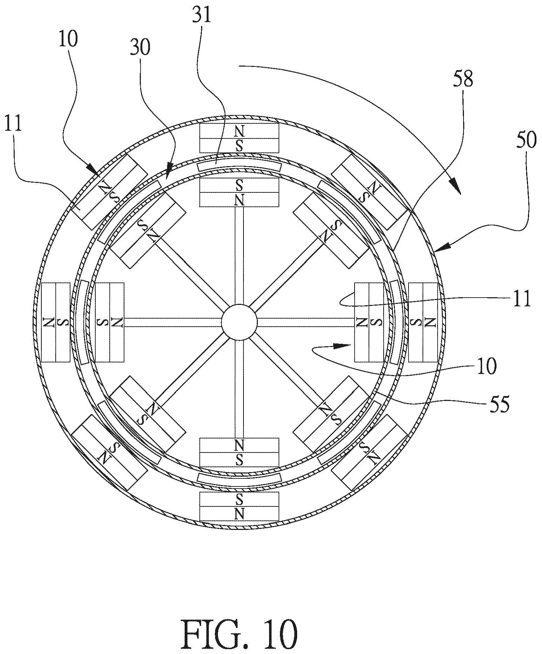

Referring to FIG. 10, a magnetically driving apparatus includes external magnetic units 10, internal magnetic units 10, driving units 30, a stationary bushing 50, a rotational bushing 55 and a ring 58 according to a fifth embodiment of the present invention. The rotational bushing 55 is coaxially located in the stationary bushing 50. The ring 58 is coaxially located between the stationary bushing 50 and the rotational bushing 55. The external magnetic units 10 are evenly attached to the stationary bushing 50, depending on which is used as a stator. The internal magnetic units 10 are evenly attached to the rotational bushing 55, depending on which is used as a rotor. The amount of the external magnetic units 10 is an integral multiple of the amount of the internal magnetic units 10, or vice versal. The S-poles (or N-poles) of the external magnetic units 10 are directed to the S-poles (or N-poles) of the internal magnetic units 10. The driving units 30 are attached to the ring 58. The amount of the driving units 30 is equal to the amount of the magnetic units 10 attached to the stationary bushing 50 or the amount of the magnetic units 10 attached to the rotational bushing 55 depending on which is larger. The magnetically permeable elements 31 of the driving units 30 are movable between the active and idle positions in parallel to a common axis of the stationary bushing 50, the rotational bushing 55 and the ring 58. Thus, the rotational bushing 55 is rotated relative to the stationary bushing 50 as the magnetically permeable elements 31 of the driving units 30 are movable between the active and idle positions.

The present invention has been described via the illustration of the embodiments. Those skilled in the art can derive variations from the embodiments without departing from the scope of the present invention. Therefore, the embodiments shall not limit the scope of the present invention defined in the claims.

## Claims

1. A magnetically driving apparatus comprising:
two magnetic units (10) each of which comprises a magnet (11), wherein first magnetic poles of the magnets (11) are directed to each other; and
a driving unit (30) located between the magnetic units (10), wherein the driving unit (30) comprises a magnetically permeable element (31) movable between an active position for magnetically attracting the magnets (11) and an idle position clear of the magnetism of the magnets (11) to allow the magnets (11) to magnetically repulse each other.

2. The magnetically driving apparatus according to claim 1, wherein the magnetically permeable element (31) of the driving unit (30) is made of a material of high magnetic permeability.

3. The magnetically driving apparatus according to claim 1, further comprising a partition between the driving unit (30) and each of the adjacent ones of the magnetic units (10), wherein the partition is made of a material of substantially no magnetic permeability.

4. The magnetically driving apparatus according to claim 1, further comprising a frame (40) for supporting the magnetic units (10) and the driving units (30) in a rectilinear manner, wherein the frame (40) comprises two tracks (41) for movably supporting the magnetic units (10), wherein the driving unit (30) is located between the tracks (41), wherein each of the driving units (30) further comprises a separating unit (32) for separating the magnetically permeable element (31) from the two adjacent ones of the magnetic units (10).

5. The magnetically driving apparatus according to claim 1, further comprising a frame (40), wherein one of the magnetic units (10) is non-movably attached to the frame (40) while the remaining one of the magnetic units (10) is movable on the frame (40), wherein the driving unit (30) is located next to the non-movable magnetic unit (10).

6. The magnetically driving apparatus according to claim 1, further comprising a rectilinear output unit (80) connected to the magnetic units (10) so that the movement of the magnetic units (10) is converted into rectilinear movement of the rectilinear output unit (80).

7. The magnetically driving apparatus according to claim 1, further comprising a crank-based output unit (90) connected to the magnetic units (10) to convert the he movement of the magnetic units (10) into rotation of the crank-based output unit (90).

8. The magnetically driving apparatus according to claim 1, further comprising:
a stationary bushing (50) for supporting a first group of the magnetic units (10);
a rotational bushing (55) coaxial with the stationary bushing (50) for supporting a second group of the magnetic units (10), wherein the magnetic units (10) in the second group is an integral multiple of the amount of the magnetic units (10) in the first group, where the first magnetic poles of the magnets (11) of the magnetic units (10) in the first group are directed at the first magnetic poles of the magnets (11) of the magnetic units (10) in the second group; and
a ring (58) coaxially between the stationary and rotational bushings (50, 55), wherein the driving units (30) are connected to the ring (58), wherein the amount of the driving units (30) is equal to the amount of the magnetic units (10) in the first or second group depending on which is larger, wherein the magnetically permeable elements (31) of the driving units (30) are movable axially between the active and idle positions.

9. A magnetically driving apparatus comprising:
magnetic units (10) each of which comprises a magnet (11); and
driving units (30) each of which is located between two adjacent ones of the magnetic units (10), wherein first magnetic poles of the magnets (11) on two sides of each of the driving units (30) are directed to each other;
wherein each of the driving units (30) comprises a magnetically permeable element (31) movable between an active position for magnetically attracting two adjacent ones of the magnets (11) and an idle position clear of the magnetism of the adjacent magnets (11) to allow the adjacent magnets (11) to magnetically repulse each other, wherein a first group of driving units (30);
wherein the driving units (30) are sorted into a first group and a second group, the driving units (30) in the first group are alternate with the driving units (30) in the second group, and the magnetically permeable elements (31) in the first group are in the active position while the magnetically permeable elements (31) in the second group are in the idle position.
